# DEMANDE DE BREVET EUROPEEN

(11) **EP 0 813 059 A1**
(43) Date de publication de la demande: **17.12.1997**
(21) Numéro de dépôt: 97440049.1
(22) Date de dépôt: 11.06.1997
(51) Int. Cl.: G01N 27/417

(54) **Procédé de mesure d'une atmosphère gazeuse dans un four de cémentation basse pression, de nitruration ou de nitrocarburation et sonde pour réaliser cette mesure**

(30) Priorité: 14.06.1996 FR 9607585
(71) Demandeur: Crevoiserat, Jean-Michel, 2944 Bonfol (CH)
(72) Inventeur: Crevoiserat, Jean-Michel, 2944 Bonfol (CH)
(74) Mandataire: Nithardt, Roland

(57) **Abrégé**

La présente invention concerne un procédé de mesure d'une atmosphère gazeuse dans un four de cémentation basse pression, de nitruration ou de nitrocarburation et une sonde pour réaliser cette mesure, permettant de contrôler et de réguler la concentration de carbone dans les atmosphères de cémentation basse pression ou le potentiel de nitruration Kn dans les atmosphères de nitruration et de nitrocarburation même lorsque lesdites atmosphères sont dépourvues d'oxygène.

Le procédé est caractérisé en ce que l'on injecte par un conduit d'amenée (14) isolé du four un gaz oxydant dans un réacteur (28), où il se mélange à l'atmosphère du four à mesurer, en ce que l'on applique ces gaz ayant une concentration X sur une face d'un électrolyte solide (29), en ce que l'on applique un gaz de référence ayant une concentration X' sur l'autre face de l'électrolyte solide, en ce que l'on mesure une différence de potentiel due à la différence des concentrations gazeuses d'oxygène de part et d'autre de l'élément d'électrolyte solide, et en ce que l'on détermine le rapport des pressions partielles d'oxygène pour en déduire la concentration de carbone en cémentation basse pression ou le potentiel de nitruration ou de nitrocarburation.

## Description

La présente invention concerne un procédé de mesure d'une atmosphère gazeuse dans un four de cémentation basse pression, de nitruration ou de nitrocarburation. L'invention concerne également une sonde pour réaliser cette mesure.

La nitruration et la nitrocarburation sont des traitements thermochimiques apparentés qui améliorent la résistance à la compression, la résistance à la flexion alternée, les propriétés tribologiques et la résistance à la corrosion des aciers. On choisit l'un ou l'autre de ces procédés en fonction de la propriété que l'on désire améliorer.

La nitruration est pratiquée depuis très longtemps et prend une place de plus en plus importante dans le marché du traitement thermique de pièces mécaniques, par exemple des vis ou des roues dentées. L'avantage de la nitruration est une température de traitement relativement basse, comprise entre 500 et 560°C, ce qui permet de ne pas altérer l'état de surface des pièces. Ainsi pour des engrenages, il n'est plus nécessaire de rectifier les dents après traitement puisque les pièces sont restées parfaitement propres. La nitruration ou la nitrocarburation sont également utilisées pour traiter par exemple des réducteurs entre le turboréacteur d'un hélicoptère et le rotor, ce qui permet à l'hélicoptère, même s'il n'y a plus d'huile dans le réducteur, de voler normalement pendant encore 30 minutes.

La nitruration est pratiquée entre 500°C et 560°c pour des couches de 3 à 5/10ème de mm pouvant aller jusqu'à 1 mm pour les traitements dans le domaine de l'aviation. Les temps de traitement sont généralement compris entre 10 et 100 heures. Les duretés obtenues sont élevées.

La nitrocarburation est de plus en plus pratiquée. La température se situe théoriquement toujours à 570°C, mais pratiquement entre 560°C et 620°C. Les duretés obtenues sont plus faibles que celles obtenues en nitruration, mais les temps de traitement sont plus courts, généralement entre 2 et 4 heures.

Au cours de la nitruration et de la nitrocarburation, deux couches se forment à la surface de l'acier à traiter : la couche de combinaison et la couche de diffusion ou couche blanche.

A l'heure actuelle, il n'existe aucun moyen pour contrôler la formation des nitrures dans l'acier et pour calculer véritablement les épaisseurs des couches.

C'est pourquoi on utilise aujourd'hui des méthodes empiriques basées sur la mesure de l'atmosphère de nitruration ou de nitrocarburation. Avec une certaine composition de gaz utilisés pendant le traitement, et en fonction de divers paramètres, tels que le type d'acier, la nature de la pièce ou la température, on obtient des recettes pour reproduire des couches de nitruration de même nature et de même épaisseur pour les mêmes paramètres. Ce procédé nécessite en conséquence un contrôle rigoureux de l'atmosphère de nitruration pour assurer l'épaisseur des couches et certaines caractéristiques exigées sur ces couches. L'avantage de la régulation de l'atmosphère est la reproductibilité des couches sur un type d'acier donné, indépendamment de la charge.

En nitruration, l'atmosphère, constituée d'ammoniac NH₃ et d'azote N₂ ou de NH₃ et de NH₃ craqué, est aujourd'hui contrôlable au moyen de deux analyseurs de gaz, un analyseur NH₃ mesurant l'ammoniac résiduel et un analyseur H₂ mesurant l'hydrogène résiduel. En connaissant la quantité résiduelle de NH₃ et de H₂, on peut calculer le potentiel de nitruration "Kn". Les analyseurs étant extrêmement onéreux, on utilise généralement un seul analyseur NH₃ et la quantité résiduelle de H₂ est déterminée par calcul.

En nitrocarburation, le contrôle de l'atmosphère dépend des gaz utilisés qui sont très variables. On relève deux types de nitrocarburation, l'un avec les gaz ammoniac NH₃, azote N₂ et dioxyde de carbone CO₂ et l'autre avec les gaz ammoniac NH₃, azote N₂ et méthane CH₄ ou propane (C₃H₈).

Dans le premier cas, on associe en fait NH₃, C et O₂ et lorsque l'on retire le gaz pour l'analyser, on forme à 190°C de l'urée qui va obstruer tous les systèmes. L'analyse devient donc totalement impossible. Certains ont tenté de chauffer les conduits et les analyseurs à plus de 190°C, mais les systèmes électroniques et les cellules de mesure des analyseurs ne résistent pas à une telle température.

Dans le deuxième cas, on associe NH₃ et C. On ne forme donc pas d'urée et l'analyse est possible avec un analyseur NH₃ et d'autres analyseurs (CH₄, H₂, etc.), le calcul de la quantité de H₂ résiduelle étant totalement aléatoire dans ce cas.

Par conséquent, le contrôle de l'atmosphère de nitrocarburation au moyen d'analyseurs est soit impossible, soit très coûteux, étant donné qu'un analyseur représente un investissement particulièrement important, sans compter les équipements, à savoir les pompes, les filtres, le gaz étalon, les vannes de sélection, etc. De plus, même si le contrôle d'une atmosphère de nitrocarburation de type "Lucas", c'est-à-dire comprenant NH₃, N₂ et CH₄ (ou C₃H₈), est possible, les utilisateurs qui ont l'habitude de travailler avec par exemple 50% de NH₃, 45% de N₂ et 5% de CO₂ et qui ont mis plusieurs années à mettre leurs gammes au point pour des charges types (même poids, même nombre de pièces, même type d'acier) ne veulent pas changer de méthode de travail et introduire du CH₄ ou du C₃H₈ pour remplacer le CO₂.

Pour ces cas très majoritaires, la seule solution est d'utiliser une sonde in situ qui permettra de réguler le potentiel de nitruration Kn pour un four donné grâce au contrôle de la composition du gaz dans ce four.

Les sondes qui ont été développées et qui existent actuellement sur le marché sont toutes basées sur le principe des sondes à oxygène pour mesurer la pression partielle d'oxygène dans l'atmosphère du four. La pression partielle d'oxygène est un indicateur précieux pour les procédés de nitruration et de nitrocarburation. Par la connaissance de la pression partielle d'oxygène dans le gaz de réaction et dans le mélange des gaz frais, il est possible de déterminer les ordres de grandeur du processus de nitruration dans lequel on admet les équilibres thermodynamiques.

Cependant l'utilisation de sondes à oxygène signifie que ces sondes ne sont capables de mesurer que des atmosphères dans lesquelles on trouve de l'oxygène, en particulier les atmosphères de nitrocarburation dont la majorité est composée de NH₃, N₂ et CO₂.

Par contre, dans les atmosphères de type "Lucas" avec NH₃, N₂ et CH₄, ainsi que dans les atmosphères de nitruration avec NH₃ et N₂ ou NH₃ et NH₃ craqué, on ne trouve pas d'oxygène. La mesure et le contrôle de telles atmosphères sont donc impossibles avec une sonde à oxygène. Il faudra donc recourir aux analyseurs comme cela est décrit ci-dessus.

De manière à pouvoir malgré tout utiliser une sonde à oxygène pour la nitruration ou la nitrocarburation de type "Lucas", une solution a consisté à ajouter dans le four des traces d'oxygène sous différentes formes. Cependant, cette solution présente un inconvénient majeur. En effet, même s'il est fortement conseillé de préoxyder les pièces avant le traitement, il faut ensuite purger l'atmosphère à l'azote ou faire le vide pour enlever toute trace d'oxygène, car l'oxygène ralentit considérablement le transfert des nitrures et augmente considérablement par conséquent le temps de traitement et l'épaisseur de la couche blanche. L'oxygène modifie également la structure des nitrures dans la pièce, toute nitruration profonde devenant impossible.

Par ailleurs, un autre type de traitement thermochimique, appelé : la cémentation basse pression, est entrain de connaître un développement important. Ce nouveau traitement présente beaucoup d'avantages métallurgiques et permet la cémentation en ligne intégrée, sans passer par ce qu'on appelle communément la trempe. Néanmoins, il est primordial d'assurer le suivi de l'atmosphère de cémentation dans le but de pouvoir garantir le respect de la qualité et des normes. A l'heure actuelle, il n'existe aucun appareil capable de remplir cette fonction. Seule une sonde In Situ permettrait d'assurer la surveillance du carbone absorbé par les pièces dans un four en basse pression, dont l'atmosphère est formé par une ou plusieurs injections modulées d'un hydrocarbure, comme le propane C₃H₈.

La présente invention vise à pallier les inconvénients mentionnés ci-dessus et les manques existants en proposant un procédé de mesure d'une atmosphère gazeuse avec ou sans trace d'oxygène dans un four de cémentation basse pression, de nitruration ou de nitrocarburation, en mélangeant un échantillon de ladite atmosphère à un gaz oxydant pour provoquer une réaction chimique mesurable utilisant le principe des pressions partielles d'oxygène. Ce procédé permet de réguler le potentiel de nitruration Kn dans toutes les atmosphères de nitruration et de nitrocarburation, ainsi que la concentration de carbone dans les atmosphères de cémentation basse pression.

Elle propose également une sonde pour la mise en oeuvre de ce procédé qui permet de mesurer toutes les atmosphères gazeuses sans trace d'oxygène dans les fours de cémentation basse pression, de nitruration ou de nitrocarburation, sans analyseur. Elle permet également à ses utilisateurs de travailler dans les conditions dont ils ont l'habitude, sans changer leur méthode et surtout sans changer leur processus de nitruration ou de nitrocarburation qu'ils ont mis au point.

Dans ce but, l'invention concerne un procédé du genre indiqué en préambule, caractérisé en ce que l'on injecte par un conduit d'amenée isolé du four un gaz oxydant dans un réacteur, en ce que l'on mélange ledit gaz oxydant avec un échantillon de gaz prélevé dans le four dans ledit réacteur où ils réagissent pour donner un nouvel échantillon gazeux E de concentration en oxygène X, en ce que le nouvel échantillon E est appliqué sur une face d'un électrolyte solide, en ce que l'on applique un échantillon gazeux de référence F, F' de concentration en oxygène X', X" sur une autre face de l'électrolyte solide, en ce que l'on mesure une différence de potentiel au moyen d'électrodes, cette différence de potentiel étant due à la différence des concentrations gazeuses en oxygène X et X', X" entre les échantillons E et F, F' de part et d'autre de l'élément d'électrolyte solide, et en ce que l'on détermine le rapport des pressions partielles d'oxygène selon les différentes atmosphères pour en déduire la concentration de carbone en cémentation ou le potentiel de nitruration ou de nitrocarburation.

L'échantillon gazeux de référence F peut être de l'air. Dans ce cas, la concentration en oxygène X' est connue et égale à 21%.

On peut également modifier les concentrations des gaz constituant ledit échantillon E pour obtenir l'échantillon gazeux de référence F' de concentration en oxygène X", en le chauffant suffisamment de manière à dissocier au moins un des gaz constituant ledit échantillon E.

De préférence, les différents gaz circulent de manière continue dans la sonde.

La présente invention concerne également une sonde pour la mise en oeuvre du procédé selon l'invention, ladite sonde comportant un corps agencé pour être monté sur une paroi dudit four, de telle manière qu'une partie dudit corps soit en contact avec l'atmosphère gazeuse du four, ledit corps comprenant un élément d'électrolyte solide et une première et une seconde électrodes disposées sur les faces opposées dudit élément, pour la mise en oeuvre du procédé selon la revendication 1, caractérisée en ce qu'elle comprend un conduit d'amenée d'un gaz oxydant, ledit conduit étant isolé du four, un réacteur comportant une première entrée destinée à recevoir ledit conduit d'amenée du gaz oxydant, une seconde entrée destinée à recevoir un échantillon de gaz prélevé dans le four, ledit échantillon de gaz se mélangeant et réagissant avec le gaz oxydant injecté pour donner un nouvel échantillon gazeux E de concentration en oxygène X, ledit réacteur comprenant également une sortie dudit échantillon gazeux E communiquant avec l'intérieur du corps de la sonde, et en ce que le corps de la sonde comprend une zone de mesure de la pression partielle d'oxygène dans l'échantillon gazeux E, une zone de mesure de la pression partielle d'oxygène dans un échantillon gazeux de référence F, F' de concentration en oxygène X', X", lesdites zones de mesure de la pression partielle d'oxygène étant situées de part et d'autre de l'élément d'électrolyte solide, des moyens pour mesurer une différence de potentiel, celle-ci étant due à la différence des concentrations gazeuses en oxygène X et X', X" entre les échantillons E et F, F' de part et d'autre de l'élément d'électrolyte solide, et des moyens agencés pour déterminer le rapport des pressions partielles d'oxygène selon les différentes atmosphères pour en déduire la concentration de carbone en cémentation ou le potentiel de nitruration ou de nitrocarburation.

Dans une forme de réalisation préférée de l'invention, l'élément d'électrolyte solide présente la forme d'un tube en U mais peut aussi présenter une forme choisie parmi le groupe comprenant au moins une bille, une pastille, un embout et un cylindre, ledit élément étant monté à l'extrémité d'un tube réalisé dans une matière choisie parmi le groupe comprenant au moins un acier réfractaire et une céramique.

De préférence, l'élément d'électrolyte solide est réalisé en oxyde de zirconium stabilisé.

Le gaz oxydant injecté dans le réacteur de la sonde peut être choisi parmi le groupe comprenant au moins l'air, le monoxyde de carbone, le dioxyde de carbone, le dioxyde d'azote, le dioxyde et le protoxyde d'azote.

Le réacteur peut comporter une cavité intérieure contenant des éléments catalyseurs réalisés en matière réfractaire ou en platine.

D'une manière particulièrement avantageuse, la zone de mesure de la pression partielle d'oxygène dans l'échantillon gazeux E est constituée par au moins la face extérieure de l'élément d'électrolyte solide, un tube de guidage disposé autour dudit élément et la première électrode, cette électrode étant reliée à la masse de la sonde couplée à une borne électrique.

De même, la zone de mesure de la pression partielle d'oxygène dans l'échantillon gazeux de référence F, F' est constituée par au moins la face intérieure de l'élément d'électrolyte solide et un tube isolant supportant la seconde électrode, cette électrode étant reliée à une autre borne électrique par un fil conducteur.

Dans une des formes de réalisation de l'invention, l'échantillon gazeux de référence F comprend de l'air de référence.

Dans une autre forme de réalisation, la sonde comporte une zone de modification des concentrations des gaz constituant l'échantillon gazeux E de manière à obtenir un nouvel échantillon gazeux de référence F' de concentration en oxygène X", cette zone comprenant au moins une gaine entourée par des éléments chauffant, cette gaine étant disposée autour de l'élément d'électrolyte solide.

La sonde comporte avantageusement au moins un conduit d'évacuation de gaz et au moins un conduit d'amenée de gaz, ces conduits étant disposés à l'extérieur du four et reliés à au moins un débitmètre massique pour injecter et aspirer des échantillons de gaz titrés dans ladite sonde.

Au moins ledit tube isolant peut être réalisé en céramique et au moins ladite gaine, ledit tube de guidage, ledit réacteur et ledit conduit d'amenée du gaz oxydant peuvent être réalisés en acier réfractaire.

La présente invention et ses avantages apparaîtront mieux dans la description suivante de deux exemples de réalisation, non exhaustifs, en référence aux dessins annexés, dans lesquels :
- la figure 1 est une vue d'ensemble en coupe d'une première forme de réalisation de la sonde selon la présente invention,
- la figure 2 est une vue similaire à la celle de la figure 1 d'une seconde forme de réalisation de la sonde selon la présente invention, et
- les figures 3a à 3d représentent des variantes de la forme de l'élément d'électrolyte.

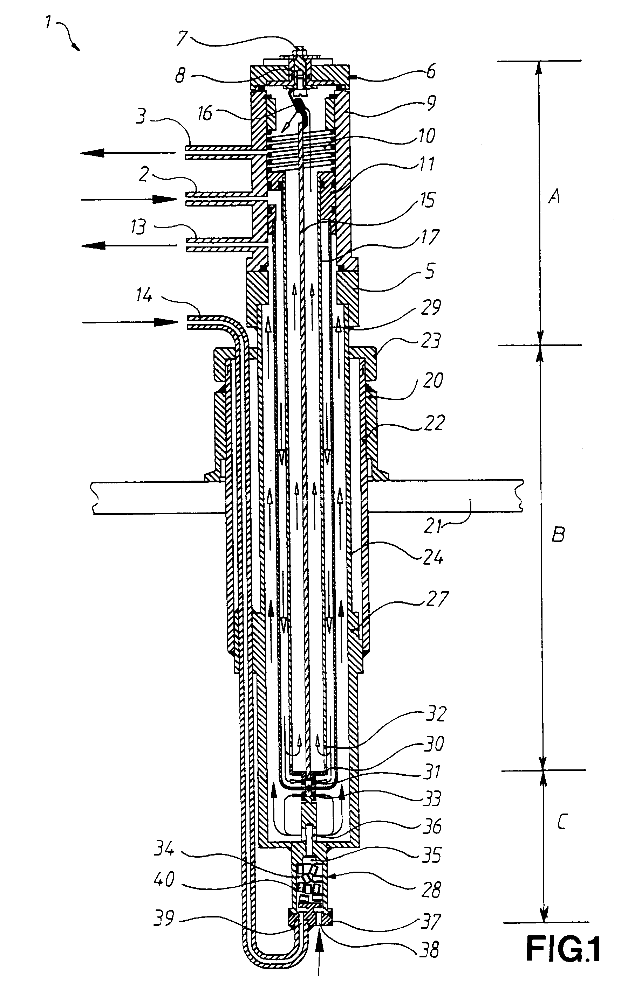

En référence à figure 1, la sonde 1 comporte trois parties :
- une partie A, extérieure au four et à température ambiante, qui comprend les entrées et sorties des différents gaz ainsi que la connectique électrique,
- une partie B qui s'étend de l'intérieur et à l'extérieur du four et correspond à la zone de circulation des différents gaz, et
- une partie C, intérieure au four et à température du four, qui correspond à l'emplacement du réacteur et à la zone de mesure de la pression partielle d'oxygène.

Cette sonde 1 comporte un corps tubulaire 22 monté dans une paroi 21 d'un four au moyen d'un raccord étanche 20 de telle manière qu'une partie dudit corps 22 soit en contact avec l'atmosphère gazeuse du four. Ce corps 22 est fermé extérieurement par un couvercle 23. Ce corps 22 comprend un tube d'électrolyte solide 29 et une première et une seconde électrodes 31, 33 disposées sur les faces opposées dudit tube 29. Ce tube d'électrolyte solide 29 est monté coaxialement entre une gaine 24 à l'extérieur et un tube isolant 17 à l'intérieur. Un écart est maintenu entre les différents tubes 17, 29 et gaine 24 de manière à créer des canaux pour la circulation des gaz à l'intérieur de la sonde. Le tube isolant 17 est réalisé en céramique à base d'alumine. Le tube d'électrolyte solide 29 est réalisé en oxyde de zirconium stabilisé à l'yttrium. Le corps 22 et la gaine 24 sont réalisés en acier réfractaire. Le raccord étanche 20 est du type BALZERS® et est réalisé en acier inoxydable. Il comporte, d'une manière connue en soi une section de forme évasée de manière à présenter une surface d'appui en contact sur la paroi 21 du four.

La partie A de la sonde 1 comporte, de haut en bas, une borne électrique 6 reliée à la masse de la sonde 1 et une borne électrique 7 montée sur un support isolant 8. La borne 6 est portée par une embase électro-pneumatique 9 reliée à la gaine 24 par un flasque de raccordement 5. Le flasque 5 est réalisé en acier inoxydable. La borne 6 et l'embase 9 sont réalisés en aluminium anodisé. Un fil conducteur 15 est relié à la borne électrique 7 par l'intermédiaire d'un câble électrique 16 et traverse le tube isolant 17. Ce fil conducteur est réalisé en acier réfractaire.

L'embase électro-pneumatique 9 comporte un ressort 10 et un piston 11 qui exerce une pression sur le tube isolant 17 pour assurer un bon contact des électrodes 31 et 33 sur le tube d'électrolyte solide 29. L'étanchéité est assurée entre le tube d'électrolyte solide 29 et le piston 11 par des joints toriques 11'. Elle comporte aussi un conduit d'évacuation des gaz 13 débouchant entre l'embase 9 et le tube d'électrolyte solide 29. Le conduit d'évacuation des gaz 13 est relié à un débitmètre massique (non représenté) pour aspirer le mélange gazeux d'une façon très précise et continue, constitué du gaz oxydant et de l'échantillon gazeux prélevé dans le four par l'entrée 38 qui sera décrite plus loin. En dessous de ce conduit 13, se trouve un conduit d'amenée d'un gaz oxydant 14 qui est relié à un débitmètre massique (non représenté) pour injecter de façon très précise et continue un gaz oxydant. Ce conduit 14 se prolonge dans les parties B et C de la sonde 1 et sera décrit plus loin. L'embase 9 comporte également un conduit d'amenée d'un gaz de référence 2 débouchant entre le tube d'électrolyte solide 29 et le tube isolant 17 et ressortant à la pression atmosphérique par un conduit d'évacuation du gaz de référence 3. Le conduit d'amenée 2 est relié à un débitmètre à flotteur (non représenté) pour injecter un gaz de référence, notamment de l'air de référence.

La partie B de la sonde 1 qui correspond à la zone de circulation des différents gaz dans la sonde comporte les différents tubes 17, 29, la gaine 24, le fil conducteur 15 ainsi que le conduit d'amenée d'un gaz oxydant 14. Le couvercle 23, qui sert de guide pour le corps 22, n'est pas soudé pour éviter les contraintes entre le corps 22 et la gaine 24 qui peuvent être soumis à des grandes différences de température. Le conduit 14 traverse le corps 22 en longeant la gaine 24 pour arriver à l'extrémité inférieure de la sonde 1 dans la partie C. Cette gaine 24 est fixée par soudure en prolongement d'un tube de guidage 27.

La partie C de la sonde comprend notamment le conduit d'amenée d'un gaz oxydant 14 et le tube de guidage 27 prolongé par un réacteur 28. Ce tube de guidage 27 entoure dans l'ordre le tube d'électrolyte solide 29, le tube isolant 17 et le fil conducteur 15. A l'intérieur du tube d'électrolyte solide 29 et fixé à l'extrémité du tube isolant 17 se trouve un support 30 pour l'électrode 31. Le fil conducteur 15 est placé au contact de ladite électrode 31 et permet de conduire sa force électromotrice à la borne électrique 7 de la sonde 1. Des orifices 32 sont ménagés transversalement dans ledit support 30 de manière à créer un canal pour la circulation retour du gaz de référence à l'intérieur du tube isolant 17.

L'électrode 33 est placée en regard de l'autre électrode 31 au contact de la surface externe du tube d'électrolyte 29. Ladite électrode 33 est au contact de la masse de la sonde, elle-même reliée à la borne électrique 6. L'électrode 33 est supportée par le réacteur 28, situé dans le prolongement du tube de guidage 27. Ledit réacteur 28 comporte une cavité intérieure 34 remplie de billes et de tubes 40 en acier réfractaire pour catalyser les réactions thermo-chimiques à l'intérieur du réacteur. La cavité intérieure 34 comporte une sortie 35 et la partie du réacteur dirigée vers l'électrode 33 est pourvue d'orifices 36 pour permettre la circulation des gaz vers l'intérieur de la sonde entre le tube de guidage 27 et le tube d'électrolyte solide 29.

L'extrémité du réacteur 28 dirigée vers l'atmosphère du four est équipée d'un couvercle 37, comportant deux entrées 38 et 39. L'entrée 38 communique directement avec l'atmosphère du four pour recevoir un échantillon de gaz prélevé dans le four dont le débit est contrôlé par un débitmètre massique non représenté. L'entrée 39 est prévue pour recevoir l'extrémité du conduit d'amenée d'un gaz oxydant 14. La plupart des pièces constituant la partie C de la sonde sont réalisées en acier réfractaire, par exemple l'Inconel®, excepté les électrodes qui sont en platine.

La sonde 1 selon la figure 1 permet de mettre en oeuvre un premier procédé de mesure d'une atmosphère gazeuse sans trace d'oxygène dans un four de cémentation basse pression. Le procédé selon l'invention consiste tout d'abord à injecter dans le réacteur 28 par le conduit d'amenée 14 un échantillon titré de gaz oxydant. Ce gaz doit contenir de l'oxygène et peut être de l'air, du monoxyde ou du dioxyde de carbone ou du dioxyde d'azote. Comme on l'a vu ci-dessus, le conduit d'amenée 14 est isolé du four de sorte que le gaz oxydant injecté par ledit conduit 14 pénètre directement par l'entrée 39 dans le réacteur 28 sans jamais avoir été au contact de l'atmosphère de cémentation. C'est seulement dans le réacteur 28 que se produit le mélange du gaz oxydant avec un échantillon titré de gaz prélevé continuellement par aspiration dans le four et introduit dans le réacteur 28 par l'entrée 38. La température du réacteur 28 se situe à la même température que celle du traitement, soit entre 800 et 1050°C.

L'atmosphère de cémentation basse pression ne comporte aucune trace d'oxygène. Elle est constituée de plusieurs molécules dérivées, provoquées par le craquage d'un hydrocarbure, comme le propane, dépendant de la température, de la pression, des débits de gaz, de la surface des pièces et du four, ainsi que des aciers en présence. Pour simplifier, les composants principaux issus des dissociations thermiques, entre 800 et 1000°C, sont l'hydrogène (H₂) et l'acéthylène (C₂H₂) ce dernier étant très représentatif de l'enrichissement en carbone de l'acier traité. L'échantillon gazeux prélevé dans le four réagit avec le gaz oxydant, en particulier, avec le produit de toutes les formations d'hydrogène dans le réacteur 40 en acier réfractaire. On peut noter, notamment, que la pression partielle d'oxygène mesurée sera une fonction de la dissociation thermique H₂ + O₂→ H₂O, O₂ provenant du gaz oxygant. Le carbone disponible sera calculé par un algorithme adapté.

De ces différentes réactions résulte un nouvel échantillon gazeux E comprenant du CO₂,H₂O, CO, avec une concentration X en oxygène, et les éléments résiduels des différents gaz oxydants décomposés. Ledit échantillon E s'échappe de la cavité intérieure 34 du réacteur 28 par la sortie 35 et se répand grâce aux orifices 36 à l'intérieur du tube de guidage 27. Ce dernier amène l'échantillon gazeux E au contact de la face extérieure du tube de l'électrolyte solide 29, ladite face étant reliée à l'électrode 33 grâce à laquelle une mesure de potentiel est effectuée en relation avec la concentration en oxygène X. L'échantillon E est ensuite évacué par le conduit d'évacuation 13.

En parallèle, un échantillon titré d'un gaz de référence comportant de l'oxygène, appelé échantillon gazeux de référence F, est injecté par le conduit d'amenée 2 et amené au contact de la face intérieure du tube de l'électrolyte solide 29, ladite face étant reliée à l'électrode 31 grâce à laquelle une mesure de potentiel est effectuée en relation avec la concentration en oxygène X' dudit échantillon F. Cet échantillon gazeux de référence F est ensuite refoulé à la pression atmosphérique par les orifices 32 ménagés dans le support 30 et est évacué par l'intérieur du tube isolant 17 jusqu'au conduit d'évacuation 3. Dans ce cas précis, le gaz de référence est de l'air dont la concentration en oxygène est bien connue et égale à 21%.

Le contact électrique entre les électrodes 31, 33 et l'électrolyte solide 29 est obtenu grâce à la pression mécanique exercée par le ressort 10 situé dans la zone A de la sonde. Ledit ressort 10 exerce une pression sur le piston 11 qui la transmet au tube isolant 17, au tube d'électrolyte solide 29, puis de l'électrode 31 à l'électrode 33 et enfin de l'électrode 33 à la masse de la sonde.

La sonde 1 selon l'invention permet de mesurer avec précision l'atmosphère gazeuse du four de manière à permettre la reproduction et la régulation de cette atmosphère. En effet, les concentrations en oxygène X et X' de part et d'autre de l'électrolyte solide 29 étant différentes, les potentiels mesurés aux électrodes 31 et 33 sont différents. On obtient donc entre les bornes 6 et 7, une force électromotrice déterminée par la relation de Nerntz, qui est fonction du rapport de la pression partielle en oxygène de part et d'autre de l'électrolyte. La force électromotrice évolue en fonction de la variation de la pression partielle d'oxygène qui est directement liée au pouvoir carburant de l'atmosphère, où le carbone libre se combine à l'oxygène apporté en formant du CO₂. La différence de potentiel mesurée aux bornes 6, 7 de la sonde permet donc d'accéder directement à la concentration de carbone résiduel du milieu de cémentation.

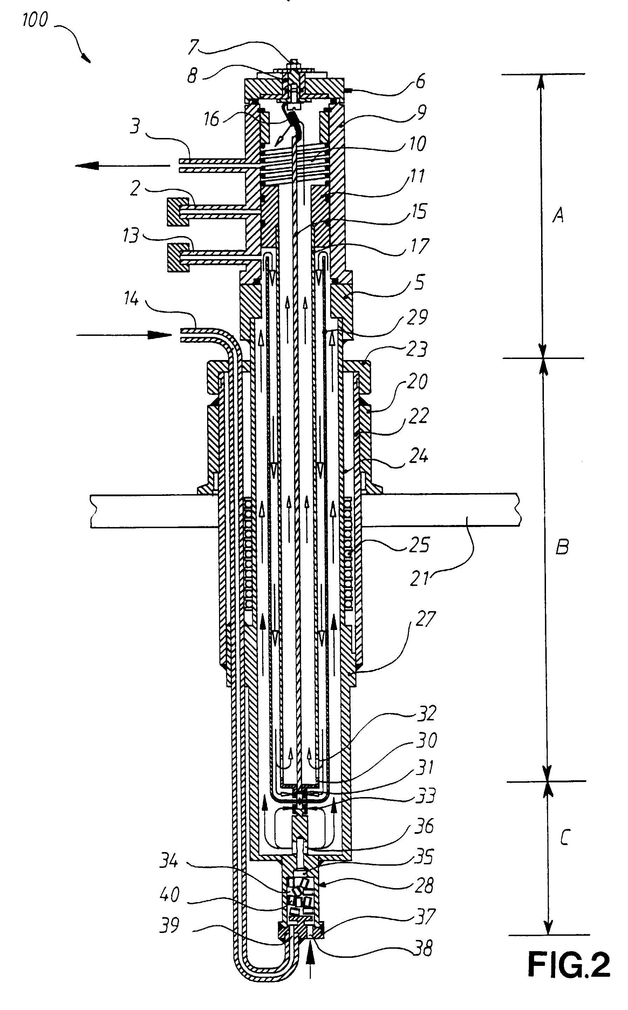

La figure 2 illustre une autre variante de réalisation de la sonde 100 selon l'invention, dans laquelle on retrouve les composants de la sonde 1 de la figure 1 avec les mêmes références. La différence réside dans la présence d'éléments chauffants 25 disposés autour de la gaine 24 et formant un craqueur destiné à modifier la concentration de l'échantillon de gaz E. Ces éléments chauffants 25 sont disposés dans la région centrale de la partie B et sont constitués de fils conducteurs en nickel pouvant chauffer à plus de 900°C et sont régulés par l'intermédiaire d'un thermocouple (non représenté). Par ailleurs, le conduit d'évacuation des gaz 13 est déplacé au conduit 3, les conduits 13 et 2 sont obturés et le tube d'électrolyte solide 29 est plus court de manière à ménager un espace entre son extrémité supérieure et le piston 11.

La sonde 100 selon la figure 2 permet de mettre en oeuvre un second procédé de mesure d'une atmosphère gazeuse sans trace d'oxygène dans un four de nitruration ou de nitrocarburation. Comme dans le premier procédé décrit, un gaz oxydant est injecté dans le réacteur 28 par le conduit d'amenée 14 isolé du four de sorte que ce gaz oxydant pénètre directement par l'entrée 39 dans le réacteur 28 sans jamais avoir été au contact de l'atmosphère de nitruration ou de nitrocarburation. C'est seulement dans le réacteur 28 que se produit le mélange du gaz oxydant avec un échantillon de gaz prélevé continuellement par aspiration dans le four et introduit dans le réacteur 28 par l'entrée 38. La température du réacteur 28 se situe à la même température que celle du traitement, soit entre 500 et 650°C.

L'atmosphère de nitruration gazeuse est constituée d'ammoniac NH₃ résiduel, d'hydrogène H₂ résiduel et d'azote N₂. L'atmosphère de nitrocarburation comprend en plus du carbone C ou du dioxyde de carbone CO₂. L'échantillon gazeux prélevé dans le four réagit avec le gaz oxydant selon plusieurs réactions catalytiques ou non, en présence des billes et des tubes 40 en acier réfractaire. On peut noter notamment les réactions H₂ + O₂ ---> H₂O, O₂ provenant du gaz oxydant, et NH₃ + H₂O ---> NH₄OH.

De ces différentes réactions catalytiques ou non. résulte un nouvel échantillon gazeux E comprenant NH₃, H₂, N₂, H₂O, NH₄OH, O₂ avec une concentration X en oxygène, et les éléments résiduels des différents gaz oxydants décomposés. Ledit échantillon E s'échappe de la cavité intérieure 34 du réacteur 28 par la sortie 35 et se répand grâce aux orifices 36 à l'intérieur du tube de guidage 27. Ce dernier amène l'échantillon gazeux E au contact de la face extérieure du tube de l'électrolyte solide 29, ladite face étant reliée à l'électrode 33 grâce à laquelle une mesure de potentiel est effectuée en relation avec la concentration en oxygène X.

L'échantillon E est ensuite aspiré entre l'intérieur du tube de guidage 27 et l'extérieur du tube d'électrolyte solide 29. Dans la zone B de la sonde, l'échantillon gazeux E passe entre la gaine 24 et l'extérieur du tube d'électrolyte solide 29. La gaine 24 en acier réfractaire, chauffée par les éléments chauffants 25, va entraîner une élévation de la température de l'échantillon E à plus de 900°C. Ceci provoque le craquage ou la dissociation thermique de l'ammoniac résiduel selon la réaction 2NH₃ ---> N₂ + 3H₂. L'échantillon E craqué est ensuite aspiré entre le tube de prolongement 19 des éléments chauffants et l'extérieur du tube de prolongement de l'électrolyte solide 18. Arrivé à l'extrémité de ces tubes dans la partie A de la sonde, l'échantillon E craqué est aspiré entre l'intérieur du tube de prolongement de l'électrolyte solide 18 et l'extérieur du tube isolant 17. Il passe ainsi une nouvelle fois dans la partie B de la sonde où l'ammoniac résiduel subit une nouvelle dissociation thermique pour donner un nouvel échantillon gazeux F.

Ces deux passages dans la zone B de la sonde permettent de craquer complètement l'ammoniac contenu dans l'échantillon E de sorte que le nouvel échantillon gazeux obtenu, appelé échantillon gazeux de référence F, ne contient plus de NH₃. La dissociation thermique de NH₃ selon la réaction 2NH₃ ---> N₂ + 3H₂ a pour effet de modifier les concentrations volumiques de tous les autres éléments présents dans l'échantillon E et qui ne sont pas affectés par l'élévation thermique. En particulier la concentration en oxygène X dans l'échantillon E varie pour donner une concentration X" dans l'échantillon gazeux de référence F'.

A la sortie de la zone B de la sonde, l'échantillon gazeux F est aspiré entre le tube d'électrolyte solide 29 et le tube isolant 17 en étant appliqué sur la face intérieure du tube de l'électrolyte solide 29, ladite face étant reliée à l'électrode 31 grâce à laquelle une mesure de potentiel est effectuée en relation avec la concentration en oxygène X".

L'échantillon gazeux de référence F' est aspiré par les orifices 32 ménagés dans le support 30 et est évacué par l'intérieur du tube isolant 17 jusqu'au conduit d'évacuation des gaz 3 qui est relié à un filtre récupérateur d'eau, un débitmètre massique et une pompe aspirante.

La sonde 100 selon l'invention permet de mesurer avec précision l'atmosphère gazeuse, sans trace d'oxygène, dans le cas de nitruration simple ou de nitrocarburation avec CH₄ ou avec oxygène, dans le cas de la nitruration ou oxynitruration avec protoxyde d'azote N₂O ou avec oxygène, dans le cas de la nitrocarburation en CO₂. En effet, les concentrations en oxygène X et X' de part et d'autre de l'électrolyte solide 29 étant différentes, les potentiels mesurés aux électrodes 31 et 33 sont différents. On obtient donc aux bornes 6, 7 de la sonde, une force électromotrice déterminée par la relation de Nerntz, qui est fonction du rapport de la pression partielle en oxygène de part et d'autre de l'électrolyte. Ce rapport dépend en premier lieu du rapport X/X" qui est lui-même fonction du rapport NH₃/H₂ et donc du potentiel de nitruration Kn. La différence de potentiel mesurée aux bornes 6, 7 permet donc d'accéder directement à la concentration de NH₃ résiduel du milieu nitrurant.

La description ci-dessus montre clairement que les buts de la présente invention sont atteints. La sonde 1, 100 selon l'invention permet d'injecter, de manière isolée du four, un gaz oxydant qui se combine à l'atmosphère du four, sans nuire à la cémentation, la nitruration ou la nitrocarburation des pièces à traiter, puisque le gaz oxydant ne se répand pas dans le four et ne présente donc pas les inconvénients liés à la présence d'oxygène. Ladite sonde ne nécessite pas d'oxygène dans le four et peut donc mesurer toutes les atmosphères de cémentation basse pression, de nitruration ou de nitrocarburation, sans analyseur.

La sonde selon l'invention peut être utilisée en nitruration avec de l'ammoniac et de l'azote ou de l'ammoniac craqué sans aucun autre gaz aussi bien qu'en nitrocarburation avec de l'ammoniac, de l'azote et du dioxyde de carbone ou du gaz naturel ou du monoxyde de carbone ou du méthane ou du propane, comme en cémentation, ou d'autres gaz habituellement utilisés, sans aucunement modifier le processus de traitement thermique mis au point.

De plus, la sonde selon l'invention s'utilise in-situ et présente donc l'avantage d'empêcher toute formation d'urée. En effet, dans les sondes de l'art antérieur, lorsque la température est inférieure à 190°C et que les gaz en présence contiennent de l'ammoniac, du carbone et de l'oxygène, il y a automatiquement formation d'urée qui obstrue tous les systèmes lorsque l'on retire le gaz pour l'analyser. Dans la sonde 100 selon l'invention, la zone B constitue un craqueur incorporé qui transforme l'ammoniac en azote et en hydrogène. Il n'y a donc plus d'ammoniac en sortie donc il n'y a plus de risque de former de l'urée.

La construction de la sonde 100 selon l'invention est telle qu'on peut calibrer ladite sonde dans le four. Pour cela, il suffit de remplir le four d'azote, d'injecter par l'intermédiaire du conduit d'amenée 14 un mélange précis d'ammoniac et de dioxyde de carbone dans le réacteur 28 de la sonde, à une température définie, et d'aspirer un débit constant de gaz dans la sonde. Il en va de même pour effectuer le calibrage dans un four de cémentation basse pression.

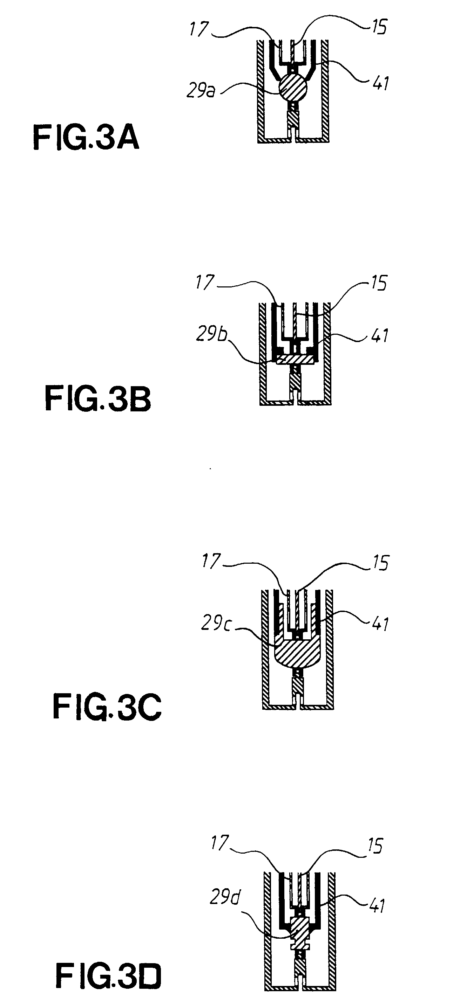

La présente invention n'est pas limitée à l'exemple de réalisation décrit mais s'étend à toute modification et variante évidente pour un homme du métier. Notamment, l'élément électrolyte solide 29 peut se présenter sous différentes formes. Dans les exemples décrits, l'élément d'électrolyte a la forme d'un tube en U 29 qui est interchangeable. Mais, en référence aux figures 3a à 3d, il est possible de monter un électrolyte solide ayant la forme d'une bille 29a (Fig. 5a), d'une pastille 29b (Fig. 5b), d'un embout 29c (Fig. 5c) ou d'un cylindre 29d (Fig. 5d). Ces différents éléments sont montés à l'extrémité d'un tube en acier réfractaire 41 ou en céramique. Ce matériau est choisi d'une part pour avoir une meilleure résistance aux chocs thermiques dans la zone B de la sonde, et d'autre part parce que le craquage de l'ammoniac ne peut être assuré qu'avec de l'acier et non pas de la céramique.

## Revendications

1. Procédé de mesure d'une atmosphère gazeuse dans un four de cémentation basse pression, de nitruration ou de nitrocarburation, caractérisé en ce que l'on injecte par un conduit d'amenée (14) isolé du four un gaz oxydant dans un réacteur (28), en ce que l'on mélange ledit gaz oxydant avec un échantillon de gaz prélevé dans le four dans ledit réacteur (28) où ils réagissent pour donner un nouvel échantillon gazeux E de concentration en oxygène X, en ce que le nouvel échantillon E est appliqué sur une face d'un électrolyte solide (29), en ce que l'on applique un échantillon gazeux de référence F, F de concentration en oxygène X', X" sur une autre face de l'électrolyte solide (29), en ce que l'on mesure une différence de potentiel au moyen d'électrodes (31, 33), cette différence de potentiel étant due à la différence des concentrations gazeuses en oxygène X et X', X" entre les échantillons E et F, F' de part et d'autre de l'élément d'électrolyte solide, et en ce que l'on détermine le rapport des pressions partielles d'oxygène selon les différentes atmosphères pour en déduire la concentration de carbone en cémentation basse pression ou le potentiel de nitruration ou de nitrocarburation.

2. Procédé selon la revendication 1, caractérisé en ce que l'échantillon gazeux de référence F est de l'air de référence dont la concentration en oxygène X' est de 21%.

3. Procédé selon la revendication 1, caractérisé en ce que l'on modifie les concentrations des gaz constituant ledit échantillon E pour obtenir l'échantillon gazeux de référence F' de concentration en oxygène X".

4. Procédé selon la revendication 3, caractérisé en ce que l'on modifie les concentrations gazeuses dans l'échantillon E en le chauffant suffisamment de manière à dissocier au moins un des gaz constituant ledit échantillon E.

5. Procédé selon la revendication 1, caractérisé en ce que les différents gaz circulent de manière continue dans la sonde.

6. Sonde (1, 100) pour mesurer l'atmosphère gazeuse dans un four de cémentation basse pression, de nitruration ou de nitrocarburation, comportant un corps (22) agencé pour être monté sur une paroi (21) dudit four, de telle manière qu'une partie dudit corps (22) soit en contact avec l'atmosphère gazeuse du four, ledit corps (22) comprenant un élément d'électrolyte solide (29) et une première et une seconde électrodes (31, 33) disposées sur les faces opposées dudit élément (29), pour la mise en oeuvre du procédé selon la revendication 1, caractérisée en ce qu'elle comprend un conduit d'amenée (14) d'un gaz oxydant, ledit conduit (14) étant isolé du four, un réacteur (28) comportant une première entrée (39) destinée à recevoir ledit conduit d'amenée (14) du gaz oxydant, une seconde entrée (38) destinée à recevoir un échantillon de gaz prélevé dans le four, ledit échantillon de gaz se mélangeant et réagissant avec le gaz oxydant injecté pour donner un nouvel échantillon gazeux E de concentration en oxygène X, ledit réacteur (28) comprenant également une sortie (35) dudit échantillon gazeux E communiquant avec l'intérieur du corps de la sonde, et en ce que le corps (22) de la sonde comprend une zone de mesure de la pression partielle d'oxygène dans l'échantillon gazeux E, une zone de mesure de la pression partielle d'oxygène dans un échantillon gazeux de référence F, F' de concentration en oxygène X', X", lesdites zones de mesure de la pression partielle d'oxygène étant situées de part et d'autre de l'élément d'électrolyte solide (29), des moyens pour mesurer une différence de potentiel (6, 7, 15, 31, 33), celle-ci étant due à la différence des concentrations gazeuses en oxygène X et X', X" entre les échantillons E et F, F de part et d'autre de l'élément d'électrolyte solide (29), et des moyens agencés pour déterminer le rapport des pressions partielles d'oxygène selon les différentes atmosphères pour en déduire la concentration de carbone en cémentation basse pression ou le potentiel de nitruration ou de nitrocarburation.

7. Sonde selon la revendication 6, caractérisée en ce que l'élément d'électrolyte solide présente la forme d'un tube en U (29).

8. Sonde selon la revendication 6, caractérisée en ce que l'élément d'électrolyte solide présente une forme choisie parmi le groupe comprenant au moins une bille (29a), une pastille (29b), un embout (29c) et un cylindre (29d), ledit élément étant monté à l'extrémité d'un tube (41) réalisé dans une matière choisie parmi le groupe comprenant au moins un acier réfractaire et une céramique.

9. Sonde selon la revendication 7 ou 8, caractérisée en ce que l'élément d'électrolyte solide (29) est réalisé en oxyde de zirconium stabilisé.

10. Sonde selon la revendication 6, caractérisée en ce que ledit gaz oxydant est choisi parmi le groupe comprenant au moins l'air, le monoxyde de carbone, le dioxyde de carbone, le dioxyde d'azote et le protoxyde d'azote.

11. Sonde selon la revendication 6, caractérisée en ce que ledit réacteur (28) comporte une cavité intérieure (34) contenant des éléments catalyseurs (40) réalisés en matière réfractaire ou en platine.

12. Sonde selon la revendication 6, caractérisée en ce que ladite zone de mesure de la pression partielle d'oxygène dans l'échantillon gazeux E est constituée par au moins la face extérieure de l'élément d'électrolyte solide (29), un tube de guidage (27) disposé autour dudit élément (29) et la première électrode (33), cette électrode étant reliée à la masse de la sonde couplée à une borne électrique (6).

13. Sonde selon la revendication 6, caractérisée en ce que ladite zone de mesure de la pression partielle d'oxygène dans l'échantillon gazeux de référence F, F' est constituée par au moins la face intérieure de l'élément d'électrolyte solide (29) et un tube isolant (17) supportant la seconde électrode (31). cette électrode étant reliée à une autre borne électrique (7) par un fil conducteur (15).

14. Sonde selon la revendication 6, caractérisée en ce que l'échantillon gazeux de référence F comprend de l'air.

15. Sonde selon la revendication 6, caractérisée en ce qu'elle comporte une zone de modification des concentrations des gaz constituant l'échantillon gazeux E de manière à obtenir un nouvel échantillon gazeux de référence F' de concentration en oxygène X".

16. Sonde selon la revendication 15, caractérisée en ce que la zone de modification des concentrations gazeuses de l'échantillon E comprend au moins une gaine (24) entourée par des éléments chauffant (25), cette gaine (24) étant disposée autour de l'élément d'électrolyte solide (29).

17. Sonde selon la revendication 6, caractérisée en ce qu'elle comporte au moins un conduit d'évacuation de gaz (13, 3) et au moins un conduit d'amenée de gaz (14, 2), ces conduits étant disposés à l'extérieur du four et reliés à au moins un débitmètre massique pour injecter et aspirer des échantillons de gaz titrés dans ladite sonde.

18. Sonde selon l'une quelconque des revendications 6, 12, 13 et 16, caractérisée en ce qu'au moins ledit tube isolant (17) est réalisé en céramique et au moins ladite gaine (24), ledit tube de guidage (27), ledit réacteur (28) et ledit conduit d'amenée (14) du gaz oxydant sont réalisés en acier réfractaire.
